# EUROPÄISCHE PATENTANMELDUNG

(11) **EP 0 913 905 A2**
(43) Veröffentlichungstag der Anmeldung: **06.05.1999**
(21) Anmeldenummer: 98120862.2
(22) Anmeldetag: 03.11.1998
(51) Int. Cl.: H02J 3/14

(54) **Verfahren und Vorrichtung zum Begrenzen der Gesamtleistungsaufnahme einer Mehrzahl von elektrischen Verbrauchern aus einem Stromnetz**

(30) Priorität: 03.11.1997 DE 19748330
(71) Anmelder: Voss GrossküchenSysteme GmbH, 31157 Sarstedt (DE)
(72) Erfinder: Riefenstein, Lutz, 30559 Hannover (DE)
(74) Vertreter: Schoppe, Fritz, Dipl.-Ing.

(57) **Zusammenfassung**

Bei einem Verfahren zum Begrenzen der Gesamtleistungsaufnahme der Mehrzahl von elektrischen Verbrauchern aus einem Stromnetz, um zu verhindern, daß die Gesamtleistungsaufnahme einen vorbestimmten maximalen Sollwert überschreitet, wird zunächst eine Benutzungsart eines jeweiligen Verbrauchers erfaßt (S6). Die Gesamtleistungsaufnahme der Verbraucher wird erfaßt und mit dem vorbestimmten maximalen Sollwert verglichen (S10). Im Anschluß wird zumindest ein Verbraucher entsprechend der erfaßten Benutzungsart abgeschaltet (S13), wenn die Gesamtleistungsaufnahme eine vorbestimmte Beziehung zu dem vorbestimmten maximalen Sollwert aufweist.

## Beschreibung

Die vorliegende Erfindung betrifft ein Verfahren und eine Vorrichtung zum Begrenzen der Gesamtleistungsaufnahme einer Mehrzahl von elektrischen Verbrauchern aus einem Stromnetz und insbesondere auf ein Verfahren und eine Vorrichtung, bei denen verhindert werden soll, daS die Gesamtleistungsaufnahme der Mehrzahl von elektrischen Verbrauchern einen vorbestimmten maximalen Sollwert überschreitet. Ein solches Verfahren und eine solche Vorrichtung können vorteilhaft beispielsweise in einer Großküche oder einer Großbäckerei eingesetzt werden.

Die effektiven Kosten der von einem Energieversorgungsunternehmen zur Verfügung gestellten elektrischen Energie setzen sich bei mittleren und größeren Abnehmern aus dem sogenannten Arbeitspreis für jede verbrauchte Kilowattstunde (kWh) und dem Leistungspreis pro Kilowatt (kW) zusammen. Der Leistungspreis pro Kilowatt beinhaltet dabei auch die Energiebereitstellungskosten für das Energieversorgungsunternehmen. Die von einem Abnehmer verbrauchte elektrische Energie wird von dem Energieversorgungsunternehmen gemessen, wobei die höchste, über eine Viertelstunde gemittelte Energieabnahme, den Preis für das gesamte Jahr bestimmt. Somit hängen die Energiekosten zum einen von der tatsächlich verbrauchten elektrischen Energie und zum anderen von dem Spitzenverbrauch, gemittelt über eine Viertelstunde, ab.

Es ist klar, daß jeder Abnehmer bestrebt ist, die Energiekosten so niedrig wie möglich zu halten. Dies ist zum einen möglich, indem der Gesamtenergieverbrauch durch übliche Sparmaßnahmen gesenkt wird. Daneben ist es möglich, die Energiekosten zu senken, indem die Leistungsspitzen reduziert werden, da diese über die oben genannten Energiebereitstellungskosten der Hauptkostenfaktor sind. Um eine solche Reduzierung der Leistungsspitzen zu ermöglichen, ist es erforderlich, den Leistungsverlauf zu messen, so daß die elektrischen Verbraucher erkannt werden können, die die Leistungsspitze verursachen.

Der Energieverbrauch setzt sich zusammen aus dem Verbrauch sogenannter Dauerläufer, beispielsweise Lüftungsanlagen, Umwälzpumpen usw., sowie sporadisch in Betrieb genommener oder thermostatisch gesteuerter elektrischer Verbraucher, beispielsweise Großküchengeräte, Backöfen, Glühöfen, Heißwasserboiler, Kälteanlagen und deren Abtauheizungen, Trockner und dergleichen. Die Dauerläufer sind als Grundlast anzusehen, während die anderen Verbraucher durch zufällige, unkontrollierte Überlagerungen die Leistungsspitzen erzeugen.

Die erste Möglichkeit, die Leistungsspitzen zu reduzieren, besteht darin, die Einschaltzeiten der einzelnen Verbraucher so zu verschieben, daß sie in den Ausschaltpausen anderer Geräte liegen. Durch diese Maßnahme ergeben sich Wartezeiten von ca. 30 Sekunden bis 1 Minute, die keine Produktionseinbußen und keine Qualitätsschwankungen begründen, aber eine Kostensenkung zur Folge haben.

Daneben ist es aus dem Stand der Technik bekannt, bei Annäherung der Leistungsaufnahme durch eine Mehrzahl von Verbrauchern an eine eingestellte Maximalleistungsaufnahme ein oder mehrere elektrische Verbraucher durch eine Einrichtung zur Verbrauchsoptimierung auszuschalten, um dadurch den Spitzenverbrauch und somit Energiekosten zu senken. Beispielsweise ist aus "Brot und Backwaren", 7-8/89, Seiten 289 bis 290, eine Energieoptimierungsanlage für Hotels, Krankenhäuser, Schulen und Großküchen bekannt, bei der das thermostatische Schaltverhalten von Verbrauchern als Maß verwendet wird, welcher Verbraucher zur Vermeidung eines übermäßigen Spitzenverbrauchs abgeschaltet werden kann, ohne Qualitätseinbußen zu bewirken. Aus "catering + hotel journal", 1-2/87, Seiten 32 bis 36, ist eine Maximumüberwachung mit einer Trendrechnung bekannt, bei der ein Rechner frühzeitig einen Trend eines Leistungsanstiegs und damit das Erreichen der voraussichtlichen Höchstmarkenleistung nach Ablauf des Meßzyklusses erkennt, so daß die Ab- oder Wiederzuschaltung von Verbrauchern schneller erfolgen kann. Dabei ist auch erwähnt, daß diese Ab- oder Wiederzuschaltung mit unterschiedlichen Prioritätsvorgaben erfolgen kann.

Die DE 19530825 A1 beschreibt Verfahren und Vorrichtungen zur Energieoptimierung bei einem Energieverteilungssystem. Aus dieser Schrift ist es bekannt, die Leistung einzelner Verbraucher zu messen, um basierend darauf zu bestimmen, welcher Verbraucher bei Überschreiten einer bestimmten Gesamtleistung abgeschaltet werden soll. Ferner lehrt diese Schrift, auf der Basis der registrierten aktuellen Leistungsaufnahme zu selektieren, welcher Verbraucher bei Bedarf zugeschaltet werden soll.

Aus der DE 19530826 C1 sind ein Verfahren und eine Vorrichtung zur Optimierung der Leistungsaufnahme bei einem Energieverteilungssystem bekannt, bei denen eine Prioritätskenngröße für jeden Verbraucher für die Zeit, in der er ab- bzw. angeschaltet ist, gewonnen wird, und bei denen bei Bedarf derjenige Verbraucher mit der höchsten Prioritätskenngröße ab- bzw. zugeschaltet wird. Gemäß dieser Druckschrift wird die Prioritätskenngröße zeitlich gemäß einer Funktion verändert, mit deren Höhe und zeitlichem Verhalten das Energiespeicherverhalten des jeweiligen Verbrauchers zumindest näherungsweise nachgebildet wird.

Bei den aus dem Stand der Technik bekannten Systemen ist es möglich, zu verhindern, daß der Leistungsverbrauch einen vorgegebenen maximalen Spitzenverbrauch nicht überschreitet. Das Abschalten einzelner Geräte wird dabei basierend auf gerätespezifischen Eigenschaften, beispielsweise dem Energiespeichervermögen des Geräts, bewirkt. Dennoch ist es bei den bekannten Systemen nicht ausgeschlossen, daß durch ein solches Abschalten eines Verbrauchers der in diesem Verbraucher durchgeführte Arbeitsprozeß beeinträchtigt wird.

Die Aufgabe der vorliegenden Erfindung besteht darin, ein Verfahren und eine Vorrichtung zu schaffen, die es zum einen ermöglichen, die Gesamtleistungsaufnahme einer Mehrzahl von elektrischen Verbrauchern unter einem vorgegebenen maximalen Leistungsverbrauch zu halten, und die zum anderen ermöglichen, daß empfindliche, in elektrischen Verbrauchern durchgeführte Arbeitsprozesse, nicht beeinträchtigt werden.

Diese Aufgabe wird durch ein Verfahren gemäß Anspruch 1 und eine Vorrichtung gemäß Anspruch 10 gelöst.

Die vorliegende Erfindung umfaßt ein Verfahren zur Begrenzung der Gesamtleistungsaufnahme einer Mehrzahl von elektrischen Verbrauchern aus einem Stromnetz, um zu verhindern, daS die Gesamtleistungsaufnahme einen vorbestimmten maximalen Sollwert überschreitet. Dazu wird eine Benutzungsart eines jeweiligen Verbrauchers erfaßt. Die Gesamtleistungsaufnahme der Verbraucher wird erfaßt und mit dem vorbestimmten maximalen Sollwert verglichen. Entsprechend der erfaßten Benutzungsart wird dann zumindest ein Verbraucher abgeschaltet, wenn die Gesamtleistungsaufnahme eine vorbestimmte Beziehung zu dem vorbestimmten maximalen Sollwert aufweist.

Die vorliegende Erfindung schafft ferner eine Vorrichtung zur Begrenzung der Gesamtleistungsaufnahme einer Mehrzahl von elektrischen Verbrauchern aus einem Stromnetz, zur Verhinderung, daß die Gesamtleistungsaufnahme einen bestimmten maximalen Sollwert überschreitet. Die Vorrichtung weist ein Erfassungseinrichtung zum Erfassen einer Benutzungsart eines jeweiligen Verbrauchers auf. Ferner ist eine Einrichtung zum Erfassen der Gesamtleistungsaufnahme der Mehrzahl von Verbrauchern vorgesehen. Eine Steuerung ist mit den Erfassungseinrichtungen und der Mehrzahl von elektrischen Verbrauchern verbunden, um die Gesamtleistungsaufnahme mit einem vorbestimmten maximalen Sollwert zu vergleichen und, wenn die Gesamtleistungsaufnahme eine vorbestimmte Beziehung zu dem vorbestimmten maximalen Sollwert aufweist, um zumindest einen der Verbraucher entsprechend der erfaßten Benutzungsart abzuschalten.

Optional kann auf der Grundlage der erfaßten Benutzungsart eine Prioritätentabelle definiert bzw. modifiziert werden, wobei das Abschalten dann entsprechend der erfaßten Prioritätentabelle durchgeführt wird.

Gemäß der vorliegenden Erfindung wird hinsichtlich des Abschalten eines Verbrauchers bzw. zum Definieren bzw. zum Modifizieren der Prioritätentabelle jeweils die Benutzungsart eines Verbrauchers berücksichtigt. Diese Benutzungsart umfaßt, wenn es sich bei der Mehrzahl von Verbrauchern beispielsweise um elektrische Küchengeräte handelt, beispielsweise die in dem jeweiligen Verbraucher einer Behandlung zu unterziehenden Produkte, d.h. beispielsweise das Gericht, das in einem Ofen zubereitet wird, oder das Lebensmittel, das in einer Friteuse frittiert wird. Ferner kann diese Benutzungsart definieren, welches Behandlungsstadium des jeweiligen Produkts gerade vorliegt. Somit ist es erfindungsgemäß möglich, das Abschalten von Verbrauchern zu verhindern, mittels derer gerade empfindliche Lebensmittel behandelt werden, und dadurch eine Beeinträchtigung der Qualität einer zubereiteten Speise zu vermeiden. Eine solche Beeinträchtigung kann beispielsweise auftreten, wenn eine Friteuse abgeschaltet wird, während gerade Pommes frites frittiert werden, da die fertiggestellten Pommes frites dann nicht die gewünschte Qualität aufweisen, wenn das verwendete Öl nicht stets die optimale Temperatur aufweist.

Gemäß der vorliegenden Erfindung werden somit nicht gerätespezifische Parameter, beispielsweise das Energiespeichervermögen der entsprechenden Verbraucher verwendet, um eine Prioritätsreihenfolge zum Abschalten derselben im Spitzenverbrauchsfall festzulegen, sondern vielmehr werden die in den Verbrauchern durchgeführten Arbeitsprozesse benutzt, um eine solche Prioritätsreihenfolge festzulegen. Es ist offensichtlich, daß neben diesen in den einzelnen Verbrauchern durchgeführten Arbeitsprozessen, d.h. der Benutzungsart der Verbraucher, auch gerätespezifische Parameter zur Festlegung der Prioritätsreihenfolge einfließen können, jedoch nur sekundär zusätzlich zu der Benutzungsart.

Die vorliegende Erfindung eignet sich besonders zum Einsatz in Großküchen oder beispielsweise auch Bäckereien, bei denen eine Vielzahl von elektrischen Geräten erforderlich ist und empfindliche Arbeitsprozesse von den Geräten durchgeführt werden. Es ist jedoch klar, daß die vorliegende Erfindung auch auf anderen Gebieten vorteilhaft Anwendung finden kann, beispielsweise in sämtlichen mittleren und großen Handwerksbetrieben.

Bei dem erfindungsgemäßen Leistungsbegrenzungssystem sind alle elektrischen Verbraucher, die zum Gesamtleistungsverbrauch beitragen, in das Verfahren eingebunden, wobei solche Verbraucher, in denen gerade sehr empfindliche Arbeitsprozesse ablaufen, von einer Abschaltung bei Erreichen eines Spitzenverbrauchs ausgeschlossen werden können, indem denselben ein entsprechender Prioritätswert zugewiesen wird. Zu den übrigen Zeiten, zu denen in denselben keine empfindlichen Arbeitsprozesse ablaufen, können dieselben wie die übrigen Verbraucher abgeschaltet werden, wobei dann die Prioritätsreihenfolge beispielsweise durch verbraucherspezifische Parameter festgelegt sein kann.

Somit ermöglicht die vorliegende Erfindung das Begrenzen des in einem Unternehmen auftretenden Spitzenverbrauchswerts, um somit die Energiekosten entscheidend zu reduzieren. Diese Kostenreduzierung kann erfindungsgemäß erreicht werden, obwohl stets sichergestellt ist, daß empfindliche Arbeitsprozesse nicht unterbrochen werden und somit eine mögliche Schädigung von zu bearbeitenden oder zu behandelnden Produkten nicht eintreten kann. Diesbezüglich geht die vorliegende Erfindung über bekannte Systeme hinaus, bei denen lediglich die Art des Verbrauchers in die Festlegung der Prioritätsreihenfolge eingeht, nicht jedoch die Benutzungsart desselben, d.h. der Arbeitsprozeß, der mittels dieses Verbrauchers gerade durchgeführt wird, sowie das Produkt, das dem Arbeitsprozeß unterworfen wird.

Weiterbildungen der vorliegenden Erfindung sind in den abhängigen Ansprüchen dargelegt.

Bevorzugte Ausführungsbeispiele werden nachfolgend bezugnehmend auf die beiliegenden Zeichnungen näher erläutert. Es zeigen:
- Fig. 1: ein Flußdiagramm zur Veranschaulichung des erfindungsgemäßen Verfahrens; und
- Fig. 2: eine schematische Darstellung zur Veranschaulichung der erfindungsgemäßen Vorrichtung.

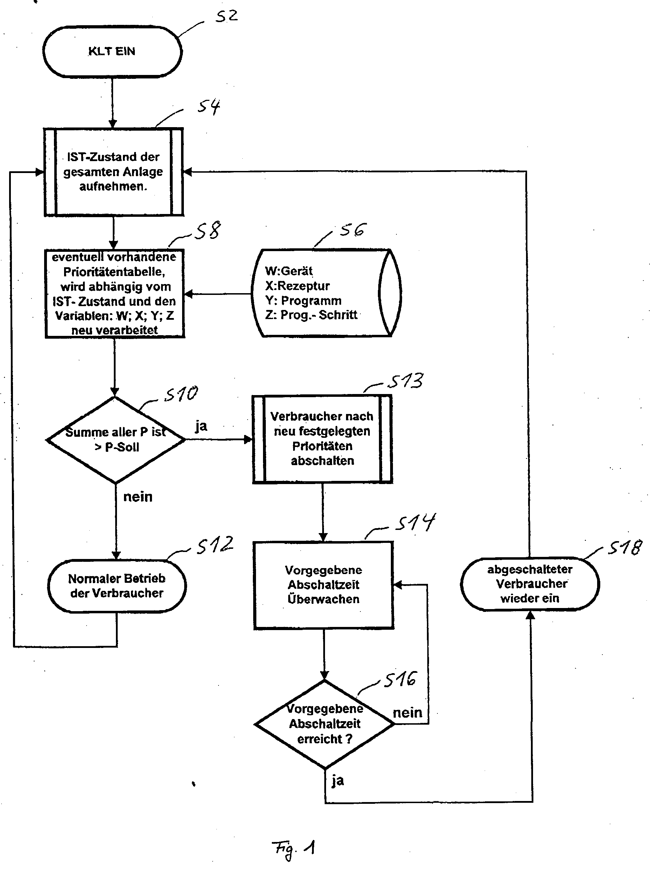

Zunächst wird bezugnehmend auf Fig. 1 ein Ausführungsbeispiel des erfindungsgemäßen Verfahrens näher erläutert, wobei sich dieses Ausführungsbeispiel auf die Anwendung des erfindungsgemäßen Verfahrens in einer Großküche bezieht, wobei die Mehrzahl von elektrischen Verbrauchern durch elektrische Küchengeräte gebildet ist. In einer solche Großküche kann das erfindungsgemäße Verfahren beispielsweise mittels der Küchenleittechnik durchgeführt werden, die für die Planung und Organisation der Arbeitsabläufe in einer Großküche eingesetzt wird.

Das erfindungsgemäße Verfahren beginnt bei einem Schritt S2, der beispielsweise durch das Einschalten der Küchenleittechnik KLT einer Großküche bzw. das Einschalten einer separaten Vorrichtung zur Begrenzung der Gesamtleistungsaufnahme bewirkt wird.

In einem Schritt S4 wird zunächst der Ist-Zustand der gesamten Anlage aufgenommen. Dieser Ist-Zustand legt fest, welche elektrischen Verbraucher in der gesamten Anlage vorgesehen sind und kann ferner gerätespezifische Parameter für diese Verbraucher definieren. Der in Schritt S4 aufgenommene IstZustand wird bei dem in Fig. 1 dargestellten Ausführungsbeispiel neben in einem Schritt S6 erfaßten Benutzungsart-Parametern für die elektrischen Verbraucher verwendet, um in einem Schritt S8 eine Prioritätentabelle zu erstellen. Die in Schritt S6 erfaßten Benutzungsart-Parameter W bis Z beziehen sich bei dem dargestellten Ausführungsbeispiel auf das Gerät, eine Rezeptur, ein Kochprogramm und den aktuellen Programmschritt. Der Parameter W gibt an, ob das jeweilige Gerät grundsätzlich abgeschaltet werden darf. Der Parameter X gibt an, ob bei dem vorliegenden Rezept, das das zu verarbeitende Kochgut beinhaltet, ein Abschalten grundsätzlich erfolgen darf. Der Parameter Y gibt an, ob für ein bestimmtes aktuelles Kochprogramm ein Abschalten grundsätzlich möglich ist, wobei dann der Parameter Z definiert, ob dieses Abschalten in dem gerade aktuellen Schritt des Kochprogramms durchgeführt werden darf.

Diese Parameter werden entweder von einem Benutzer an einer Zentralstation oder den einzelnen elektrischen Verbrauchern eingegeben oder können in der Küchenleittechnik gespeichert sein, wobei dieselben beispielsweise auf die Eingabe eines speziellen Programms hin für einen elektrischen Verbraucher abgerufen werden. Bei dem dargestellten Ausführungsbeispiel darf ein Verbraucher z.B. jeweils nur dann abgeschaltet werden, wenn für diese vier Parameter W bis Z ein entsprechender Wert gespeichert ist oder eingegeben wird, der eine Abschaltung erlaubt.

Beim Erstellen der Prioritätentabelle im Schritt S8 werden diese Benutzungsart-Parameter verwendet, um solche elektrischen Verbraucher, die empfindliche Arbeitsprozesse durchführen, in der Prioritätentabelle definierten Abschaltreihenfolge hinten einzuordnen. Alternativ können Verbraucher, die empfindliche Arbeitsprozesse durchführen, von einem Abschalten ausgenommen werden. Dadurch wird erfindungsgemäß ausgeschlossen, daS empfindliche Arbeitsprozesse durch eine Begrenzung der Gesamtleistungsaufnahme unterbrochen werden. Dadurch wird eine Beeinträchtigung der empfindlichen Arbeitsprozesse verhindert, so daß eine Beeinträchtigung der Qualität des herzustellenden Produkts, beispielsweise von Pommes frites oder anderen empfindlichen Gerichten, vermieden wird.

Es ist klar, daß es statt des Erstellens der vollständigen Prioritätentabelle möglich ist, diese jeweils nur dann zu modifizieren, wenn Änderungen des Ist-Zustands im Schritt S4 oder Änderungen der Benutzungsart-Parameter im Schritt S6 erfaßt werden. Nach dem Erstellen der Prioritätentabelle wird die durch alle elektrischen Verbraucher aufgenommene Gesamtleistung erfaßt (in Fig. 1 nicht dargestellt). Diese Erfassung der Gesamtleistung kann in bekannter Weise mittels eines oder mehrerer Leistungsmesser erfolgen. Es ist klar, daß hierbei insbesondere die eingeschalteten Verbraucher zu der Gesamtleistungsaufnahme beitragen.

Die erfaßte Gesamtleistung wird dann in einem Schritt S10 mit einem vorgegebenen maximalen Leistungssollwert P-Soll verglichen. Dieser Maximalsollwert ist in geeigneter Weise eingestellt, um zum einen einen reibungslosen Arbeitsablauf zu ermöglichen und zum anderen einen Spitzenleistungsverbrauch festzulegen, der eine Reduzierung der Energiekosten ermöglicht. Hierbei kann eine dynamische Sollwertanpassung durchgeführt werden, die sich durch die Freigabe nicht abgenommener Leistung bezogen auf die gemittelte Leistungsspitze ergibt. Somit wird ein übermäßiges, unnötiges Abschalten von Verbrauchern verhindert. Eine solche adaptive automatische Sollwertanpassung ermöglicht einen optimierten Energiebezug, wobei die Sollwertvorgabe automatisch den tatsächlichen Gegebenheiten angepaßt und nachgeführt wird.

Ergibt der Vergleich im Schritt S10, daß die aufgenommene Gesamtleistung nicht größer als der maximale Sollwert P-Soll ist, springt das Verfahren zu einem Schritt S12, der schematisch darstellt, daS der normale Betrieb der Verbraucher nicht beeinträchtigt wird, da keine Überschreitung der vorgegebenen Maximalleistungsaufnahme droht. Nach dem Schritt S12 springt das Verfahren zum Schritt S4 zurück und wird zyklisch wiederholt. Eine typische Zyklusdauer für das erfindungsgemäße Verfahren beträgt beispielsweise 0,5 Sekunden.

Ergibt der Vergleich im Schritt S10, daß die Gesamtleistungsaufnahme größer ist als der vorgegebene maximale Sollwert P-Soll springt das Verfahren zu einem Schritt S13, in dem einer der Mehrzahl von Verbrauchern entsprechend der geltenden Prioritätentabelle abgeschaltet wird. Da in der Prioritätentabelle solche Verfahren, die empfindliche Arbeitsprozesse durchführen, an den hinteren Positionen der Abschaltreihenfolge in der Prioritätentabelle angeordnet sind, bzw. von einer Abschaltung völlig ausgeschlossen sind, ist es klar, daß im Schritt S13 solche Verbraucher nicht abgeschaltet werden. Nach dem Schritt S13 kann das Verfahren direkt für einen weiteren zyklischen Durchlauf zum Schritt S4 zurückspringen (nicht dargestellt).

In Fig. 1 ist nun ferner dargestellt, wie vorgegangen wird, wenn das Abschalten eines Verbrauchers im Schritt S13 für eine vorgegebene Zeitspanne zu erfolgen hat. Dazu springt das Verfahren vom Schritt S13 zu einem Schritt S14, in dem die Abschaltzeit überwacht wird, die seit dem Abschalten im Schritt S13 vergangen ist. In einem Schritt S16 wird diese überwachte Abschaltzeit mit der vorgegebenen Abschaltzeit verglichen, um festzustellen, ob die vorgegebene Abtastzeit erreicht wurde. Ist dies der Fall, springt das Verfahren zu einem Schritt S18, in dem der in Schritt S13 abgeschaltete Verbraucher wieder eingeschaltet wird. Wird in Schritt S16 festgestellt, daß die vorgegebene Abschaltzeit nicht erreicht wurde, erfolgt weiterhin eine Überwachung der Abschaltzeit im Schritt S14. Nach dem Einschalten des Verbrauchers im Schritt S18 kann die Steuerung zum Schritt S4 zurückspringen.

Gemäß dem Flußdiagramm von Fig. 1 wird das erfindungsgemäße Verfahren zyklisch durchlaufen. Alternativ ist es möglich, das erfindungsgemäße Verfahren jeweils nur dann durchzuführen, wenn im Schritt S4 eine Änderung des Ist-Zustands der gesamten Anlage erfaßt wird, d.h. neue Verbraucher zu- bzw. abgeschaltet werden, bzw. wenn sich Änderungen der Benutzungsart-Parameter, die im Schritt S6 erfast bzw. abgerufen werden, ergeben. In einem solchen Fall würde das erfindungsgemäße Verfahren beispielsweise nach dem Einschalten des im Schritt S13 abgeschalteten Verbrauchers im Schritt S18 wieder gestartet.

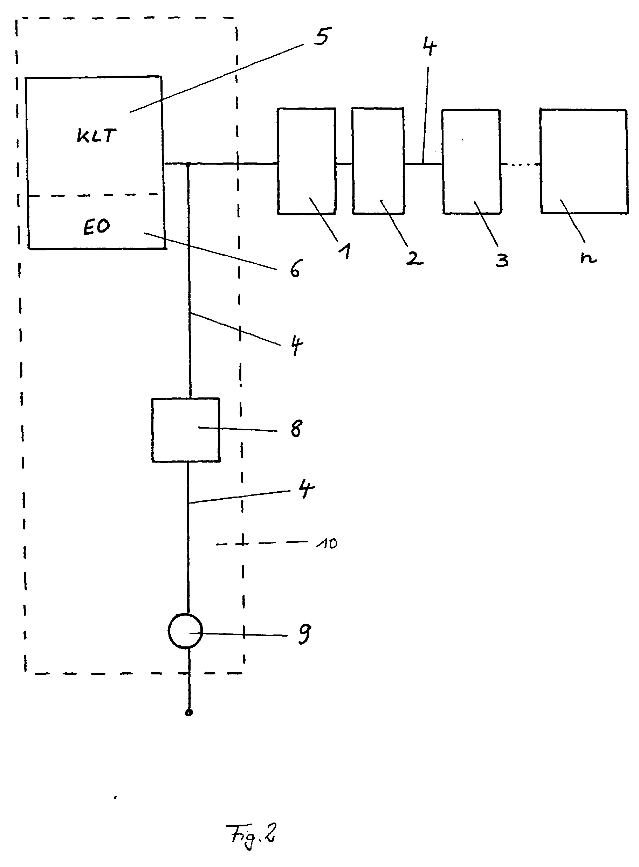

Bezugnehmend auf Fig. 2 wird nachfolgend eine erfindungsgemäße Vorrichtung zur Begrenzung der Gesamtleistungsaufnahme einer Mehrzahl von elektrischen Verbrauchern aus einem Stromnetz beschrieben. Mittels dieser Vorrichtung wird verhindert, daß die Gesamtleistungsaufnahme einen vorbestimmten maximalen Sollwert überschreitet, um dadurch eine Reduzierung der Energiekosten zu ermöglichen.

In Fig. 2 sind mehrere elektrische Verbraucher 1, 2, 3,... n dargestellt, bei denen es sich beispielsweise um elektrische Küchengeräte handeln kann. Diese elektrischen Verbraucher sind vorzugsweise über ein Datenbussystem 4 miteinander und mit einer Steuereinrichtung 5 verbunden, die beispielsweise durch die Küchenleittechnik KLT gebildet sein kann. Der Steuereinrichtung 5 ist eine Speichereinrichtung 6, die als Energiekostenoptimierungseinrichtung EO bezeichnet werden kann, zugeordnet. Über das Datenbussystem 4 ist die Steuereinrichtung 5 ferner mit einer Einrichtung 8 verbunden, in der der Vergleich zwischen dem maximalen Sollwert und dem mittels einer Meßeinrichtung 9 erfaßten Wert der Gesamtleistungsaufnahme der Mehrzahl von Verbrauchern stattfinden kann. Es ist jedoch klar, daß die Vergleichseinrichtung 8 als Teil der Steuereinrichtung 5 in dieselbe integriert sein kann. In der Speichereinrichtung 6 können Informationen über die in den elektrischen Verbrauchern beziehungsweise durch die elektrischen Verbraucher durchgeführten Arbeitsprozesse abgelegt sein, beispielsweise die in Fig. 1 dargestellten Parameter W bis Z. Ferner kann in der Speichereinrichtung 6 die Prioritätentabelle gespeichert sein, aufgrund derer die Steuereinrichtung 5 einen der Verbraucher bestimmt, der für den Fall, daß die Vergleichseinrichtung feststellt, daß die Gesamtleistungsaufnahme größer ist als der maximale Sollwert, abgeschaltet wird.

Die Steuereinrichtung 5, die Speichereinrichtung 6, die Vergleichseinrichtung 8 sowie die Meßeinrichtung 9 können durch die Komponenten einer Küchenleittechnik 10 gebildet sein. Diesbezüglich können bestehende Küchenleittechniken in geeigneter Weise angepaßt werden, um zur Durchführung des erfindungsgemäßen Verfahrens geeignet zu sein. Somit kann die vorliegende Erfindung ohne großen Kostenaufwand implementiert werden.

Bei dem bezugnehmend auf Fig. 1 beschriebenen Ausführungsbeispiel wird basierend auf der oder den erfaßten Benutzungsarten eine Prioritätentabelle erstellt. Es ist jedoch klar, daß das Erstellen einer solchen Prioritätentabelle ein optionales Merkmal ist. Ein Abschalten eines spezifischen Verbrauchers kann immer dann verhindert werden, wenn für diesen Verbraucher eine Benutzungsart erfaßt wird, die ein Abschalten ausschließt. In diesem Fall ist es ausreichend, daß die Steuerung erkennt, daß dieser Verbraucher nicht abgeschaltet werden darf.

Es ist klar, daß alternativ zu dem bezugnehmend auf Fig. 1 beschriebenen Verfahren, das Abschalten eines Verbrauchers erfolgen kann, wenn eine starke Annäherung der gesamten aufgenommenen Leistung an einen maximalen Sollwert erfolgt. Dadurch ist es möglich, einen gewissen Sicherheitsbereich zu implementieren, der eine zusätzliche Gewähr dafür bietet, daß nicht durch Überschreitung des Spitzenwerts übermäßige Energiekosten anfallen. Es ist ferner anzumerken, daß erfindungsgemäß die Prioritätentabelle lediglich auf der Grundlage der Benutzungsart-Parameter, nicht jedoch zusätzlich auf der Grundlage von gerätespezifischen Parametern erstellt werden kann. Daneben ist es möglich, zusätzlich die momentane Leistungsaufnahme eines Verbrauchers zum Erstellen bzw. Modifizieren der Prioritätentabelle zu berücksichtigen.

## Patentansprüche

1. Verfahren zum Begrenzen der Gesamtleistungsaufnahme einer Mehrzahl von elektrischen Verbrauchern (1, 2, 3, .., n) aus einem Stromnetz, um zu verhindern, daß die Gesamtleistungsaufnahme einen vorbestimmten maximalen Sollwert (P-Soll) überschreitet, mit folgenden Schritten:
Erfassen (S6) einer Benutzungsart eines jeweiligen Verbrauchers;
Erfassen der Gesamtleistungsaufnahme der Verbraucher;
Vergleichen (S10) der Gesamtleistungsaufnahme mit dem vorbestimmten maximalen Sollwert; und
Abschalten (S13) zumindest eines Verbrauchers entsprechend der erfaßten Benutzungsart, wenn die Gesamtleistungsaufnahme eine vorbestimmte Beziehung zu dem vor-bestimmten maximalen Sollwert aufweist.

2. Verfahren nach Anspruch 1, bei dem nach dem Schritt des Erfassens (S6) einer Benutzungsart ein Schritt des Definierens oder Modifizierens (S8) einer Prioritätentabelle auf der Grundlage der erfaßten Benutzungsart durchgeführt wird, und wobei der Schritt des Abschaltens (S13) auf der Grundlage der definierten oder modifizierten Prioritätstabelle durchgeführt wird;

3. Verfahren nach Anspruch 1, wobei die Mehrzahl von Verbrauchern (1, 2, 3, .., n) elektrische Küchengeräte sind, wobei die Benutzungsart der jeweiligen Verbraucher zumindest die in denselben jeweils einer Behandlung zu unterziehenden Produkte sowie die durchzuführende Behandlung definiert.

4. Verfahren gemäß Anspruch 3, bei dem die Benutzungsart ferner ein jeweiliges Benutzungsstadium definiert.

5. Verfahren nach einem der Ansprüche 2, bei dem für einen Verbraucher in der Prioritätentabelle ein Abschaltausschluß definiert wird, wenn eine vorbestimmte Benutzungsart für diesen Verbraucher erfaßt wird.

6. Verfahren nach einem der Ansprüche 1 bis 5, bei dem in dem Schritt des Abschaltens (S13) ferner gerätespezifische Parameter der Verbraucher berücksichtigt werden.

7. Verfahren nach Anspruch 6, bei der die gerätespezifischen Parameter der Verbraucher die Art des jeweiligen Verbrauchers und Energiespeicherfähigkeiten desselben umfassen.

8. Verfahren nach einem der Ansprüche 1 bis 7, bei dem das Abschalten (S13) eines jeweiligen Verbrauchers für eine vorgesehene Zeitspanne erfolgt, wobei nach dem Ablauf der Zeitspanne der jeweilige Verbraucher wieder eingeschaltet wird (S18).

9. Verfahren nach einem der Ansprüche 1 bis 7, bei dem die vorbestimmte Beziehung das Erreichen des maximalen Sollwerts (P-Soll) oder eine schnelle Annäherung an denselben ist.

10. Vorrichtung zur Begrenzung der Gesamtleistungsaufnahme einer Mehrzahl von elektrischen Verbrauchern (1, 2, 3, .., n) aus einem Stromnetz, zur Verhinderung, daß die Gesamtleistungsaufnahme einen vorbestimmten maximalen Sollwert (P-Soll) überschreitet, mit folgenden Merkmalen:
einer Erfassungseinrichtung zum Erfassen einer Benutzungsart eines jeweiligen Verbrauchers;
einer Einrichtung (9) zum Erfassen der Gesamtleistungsaufnahme der Verbraucher (1, 2, 3, .., n); und
einer Steuereinrichtung (5), die zur Übertragung von Informationen mit der Mehrzahl von elektrischen Verbrauchern und den Erfassungseinrichtungen verbunden ist, zum Vergleichen der Gesamtleistungsaufnahme mit dem vorbestimmten maximalen Sollwert (P-Soll) und zum Abschalten von zumindest einem der Verbraucher entsprechend der erfaßten Benutzungsart, wenn die Gesamtleistungsaufnahme eine vorbestimmte Beziehung zu dem vorbestimmten maximalen Sollwert aufweist.

11. Vorrichtung nach Anspruch 10, die ferner eine Speichereinrichtung (6) zum Speichern einer Prioritätentabelle auf der Grundlage der erfaßten Benutzungsart aufweist, wobei die Steuereinrichtung den zumindest einen Verbraucher entsprechend der erfaßten Benutzungsart abschaltet.

12. Vorrichtung nach Anspruch 10 oder 11, zur Begrenzung der Gesamtleistungsaufnahme einer Mehrzahl von elektrischen Küchengeräten, wobei die Benutzungsart der jeweiligen Küchengeräte die in denselben jeweils einer Behandlung zu unterziehenden Produkte sowie die durchzuführende Behandlung definiert.

13. Vorrichtung nach Anspruch 10, bei der die Benutzungsart ferner ein jeweiliges Behandlungsstadium definiert.
